# EUROPEAN PATENT SPECIFICATION

(11) **EP 3 991 900 B1**
(45) Date of publication and mention of the grant of the patent: **19.07.2023**
(21) Application number: 21203462.3
(22) Date of filing: 19.10.2021
(51) Int. Cl.: B23K 9/073, B23K 9/09, B23K 9/095, B23K 9/10, B23K 9/173

(54) **PULSE ARC WELDING POWER SUPPLY**
STROMVERSORGUNG FÜR LICHTBOGENSCHWEISSEN
ALIMENTATION ÉLECTRIQUE POUR SOUDAGE À L'ARC À IMPULSION

(30) Priority: 21.10.2020 JP 2020176378
(43) Date of publication of application: 04.05.2022
(73) Proprietor: DAIHEN Corporation, Yodogawa-ku Osaka-shi Osaka 532-8512 (JP)
(72) Inventor: TAKADA, Kento, Osaka, 532-8512 (JP); ISA, Taisaku, Osaka, 532-8512 (JP); ERA, Tetsuo, Osaka, 532-8512 (JP)
(74) Representative: Boult Wade Tennant LLP

(56) References cited:
- CN-B- 109 262 113
- JP-A- 2014 226 677
- JP-B2- 2 973 714

## Description

### FIELD

The present disclosure relates to a pulse arc welding power supply (or power source) that is capable of automatically optimizing pulse parameters.

### BACKGROUND

Consumable electrode pulse arc welding has been known as one of the conventional welding methods. By this method, welding current is varied in a predetermined manner within each pulse period (cycle) that consists of multiple (sub-)periods, while a welding wire is being fed at controlled speed. A pulse period may consist of a rising period, a peak period, a falling period, and a base period. During the rising period, a transition current rising from a lower current (base current) to an upper current (peak current) is passed for the welding. After that, the peak current is passed continuously during the peak period, a transition current falling from the peak current to the base current is passed during the falling period, and the base current is passed continuously during the base period. The welding operation is performed by repeating such a pulse period. In the pulsed arc welding, a single droplet is supposed to be transferred in each pulse period (the so-called "one pulse-one droplet transfer"). This suppresses sputtering and serves to produce high quality welding results with good bead appearance. In order to achieve the "one pulse-one droplet transfer," it is necessary to set pulse parameters relating to the peak period, peak current, etc. to appropriate values.

In general, the composition of a welding wire may differ from that of another welding wire, depending on the brand of the wires, even if the JIS standard is the same with them. Accordingly, appropriate values of pulse parameters may be different for the respective brands of the welding wires that have the same JIS standard. In addition, appropriate parameter values may vary depending on the distance (i.e., torch height) between the feeding tip and the base material (e.g., an object metal to be welded), wire feeding speed, welding speed, and other factors. For this reason, a control method that automatically adjusts the pulse parameters to appropriate values has been proposed (see JP-A-2014-226677).

In the conventional invention disclosed in JP-A-2014-226677, the timing when a short circuit occurs between the welding wire and base material is detected for each pulse period. Based on the detection result, an index representing the distribution of short circuit occurrence timings per unit time is calculated. Based on the resulting index, the pulse parameters related to the waveform of the welding current may be modified.

Another known method for adjusting pulse waveform parameters of a pulse welding system and a pulse welding system is described in CN109262113B.

When pulse arc welding is performed at high speed, for example, it is desirable to shorten the arc length by reducing the welding voltage setting value below the standard value, thereby suppressing undercutting. However, when the arc length is shortened, short circuits are more likely to occur and the amount of sputtering will increase significantly.

In this situation, the conventional method described above (optimization of pulse parameters based on the distribution of short circuit occurrence per unit time) may be useful for reducing the amount of sputtering. However, since the method is based on the distribution mentioned above, converging to the proper values of parameters will take a relatively long time and the transient response may not be good enough.

In view of the above circumstances, one of the objects of the present disclosure is to provide a pulsed arc welding power supply capable of achieving good transient response and good stability in performing automatic correction of pulse parameters.

### SUMMARY

In accordance with an aspect of the present disclosure, there is provided a pulse arc welding power supply comprising a power control circuit, a short circuit occurrence timing detection circuit, a total correction amount calculation circuit and a parameter correction circuit. Specifically, the power control circuit is configured to output a welding current for a repetition of a pulse period including a combination of a rising period, a peak period, a falling period and a base period. The welding current comprises (1) a rising transient current increasing from a base current to a peak current during the rising period, (2) the peak current during the peak period, (3) a falling transient current decreasing from the peak current to the base current during the falling period, and (4) the base current during the base period. The short circuit occurrence timing detection circuit is configured to detect a timing when a short circuit occurs between a welding wire and a base material for every pulse period. The total correction amount calculation circuit is configured to calculate a sum of correction amounts for a correction cycle including a predetermined number of pulse periods, where each correction amount is predetermined correspondingly to a short circuit occurrence timing during a pulse period. The parameter correction circuit is configured to adjust, based on the sum of correction amounts, at least one pulse parameter relating to a waveform of the welding current.

Preferably, the short circuit occurrence timing is included in one of the rising period, the peak period, the falling period and the base period.

Preferably, the at least one pulse parameter comprises a parameter relating to the peak period and/or a parameter relating to the peak current.

With the configuration described above, transient response and stability in the steady-state can be improved in automatic pulse parameter correction control. In particular, the pulse parameters can be quickly converged to the proper values even for high-speed welding, while also enjoying the steady-state stability. Therefore, performance of high quality welding with less sputtering can be expected.

### BRIEF DESCRIPTION OF DRAWINGS

Fig. 1 is a block diagram illustrating a pulse arc welding power supply according to an embodiment of the present disclosure.
Fig. 2 is a timing chart showing the waveforms of some signals used for the power supply shown in Fig. 1.

### EMBODIMENTS

Embodiments of the present disclosure will be described below with reference to the accompanying drawings.

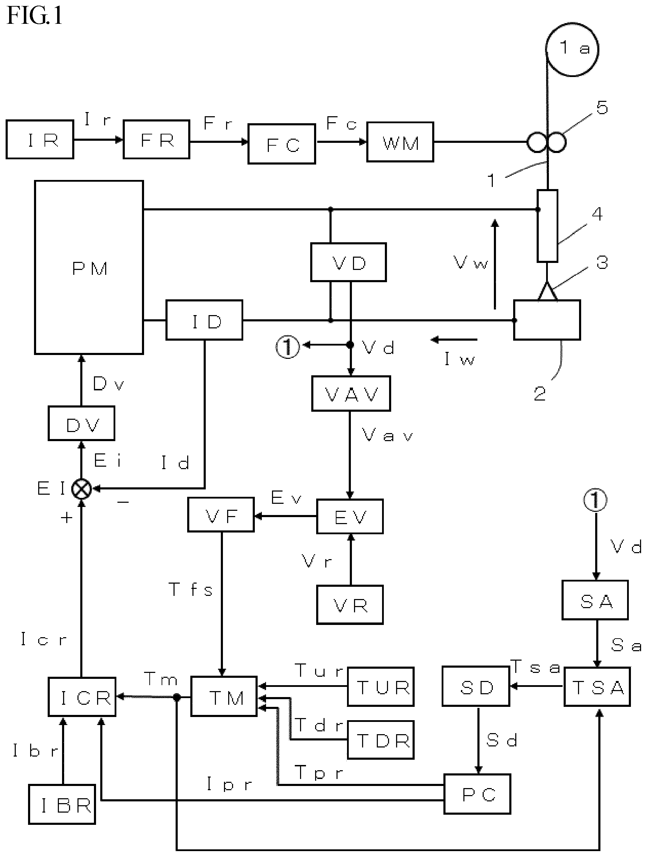

Referring to Fig. 1, the power control circuit PM is provided to receive input from, for example, a three-phase 200V commercial power supply (not shown), and to output a welding current Iw and welding voltage Vw. For this output, the power control circuit PM performs output control by inverter control according to the drive signal Dv (see below). The power control circuit PM is equipped with a primary rectifier, capacitor, inverter circuit, high frequency transformer, secondary rectifier, and reactor, although the illustration is omitted. The functions of these components are as follows. The primary rectifier rectifies the input supplied from the commercial power supply and converts it into direct current. The capacitor smoothes the rectified DC. The inverter circuit converts the smoothed DC into high-frequency AC according to the drive signal Dv. The high-frequency transformer adjusts (e.g., steps down) the high-frequency AC to a voltage suitable for arc welding. The secondary rectifier rectifies the stepped-down high-frequency AC and converts it to DC. The reactor smoothes the rectified DC.

The welding wire 1 is wound on the wire reel 1a before use. In welding, the wire feeding motor WM is driven, resulting in the rotation of the feeding roll 5 coupled to the motor. As a result, the welding wire 1 is fed through the welding torch 4, and its tip is brought adjacent to (or in contact with) the base material 2 (the object to be welded). Then, arc 3 is generated between welding wire 1 (tip) and base material 2, whereby welding is performed. At this time, welding current Iw flows through the arc 3, and welding voltage Vw is applied between the welding wire 1 and the base material 2.

The welding voltage detection circuit VD detects the welding voltage Vw and outputs a welding voltage detection signal Vd. The welding voltage average calculation circuit VAV receives the welding voltage detection signal Vd as input, averages this signal by passing it through a low-pass filter, and outputs a welding voltage average signal Vav. The welding voltage setting circuit VR outputs a predetermined welding voltage setting signal Vr. The voltage error amplification circuit EV amplifies the error between the welding voltage setting signal Vr and the welding voltage average signal Vav, and outputs a voltage error amplification signal Ev.

The voltage-frequency conversion circuit VF receives the voltage error amplification signal Ev as input and outputs a pulse frequency signal Tfs with the frequency corresponding to the value of this signal. The pulse frequency signal Tfs is a signal that rises from a low level to a high level every pulse period and remains at the high level for a short time.

The short circuit detection circuit SA receives the welding voltage detection signal Vd as input, determines if a short circuit state occurs based on the value of the received signal, and outputs a short circuit detection signal Sa in response to the occurrence of the short circuit. The short circuit detection signal Sa remains at the high level while the short circuit is occurring.

The short circuit occurrence timing detection circuit TSA receives the short circuit detection signal Sa and the timer signal Tm (described below) as input and performs the following processes to output a short circuit occurrence timing detection signal Tsa.
1) When timer signal Tm = 1 (i.e., during the rising period Tu) and the short circuit detection signal Sa has changed to High level, a short circuit occurrence timing detection signal Tsa = 1 is outputted.
2) When timer signal Tm = 2 (i.e., during the peak period Tp) and short circuit detection signal Sa has changed to High level, short circuit occurrence timing detection signal Tsa = 2 is outputted.
3) When timer signal Tm = 3 (i.e., during the falling period Td) and short circuit detection signal Sa has changed to High level, a short circuit occurrence timing detection signal Tsa = 3 is outputted.
4) When timer signal Tm = 4 (i.e., during the base period Tb) and short circuit detection signal Sa has changed to High level, a short circuit occurrence timing detection signal Tsa = 4 is outputted.

The total correction calculation circuit SD receives the above short circuit occurrence timing detection signal Tsa as input, and calculates and outputs the correction amount for each pulse period. In addition, the total correction calculation circuit SD accumulates the above correction amounts for each predetermined period or cycle, which may be referred to as a "parameter correction period (or cycle)" or simply "correction period (or cycle)" below, and outputs the result as the total correction signal Sd. For example, when short circuit occurrence timing detection signal Tsa = 1, the above correction amount will be a predetermined amount, referred to as "first correction Sd1". Likewise, when short circuit occurrence timing detection signal Tsa = 2, the above correction amount will be a predetermined "second correction Sd2". When short circuit occurrence timing detection signal Tsa = 3, the above correction amount will be a predetermined "third correction Sd3". When short circuit occurrence timing detection signal Tsa = 4, the above correction amount will be a predetermined "fourth correction Sd4".

The rising period setting circuit TUR outputs a predetermined rising period setting signal Tur. The falling period setting circuit TDR outputs a predetermined falling period setting signal Tdr.

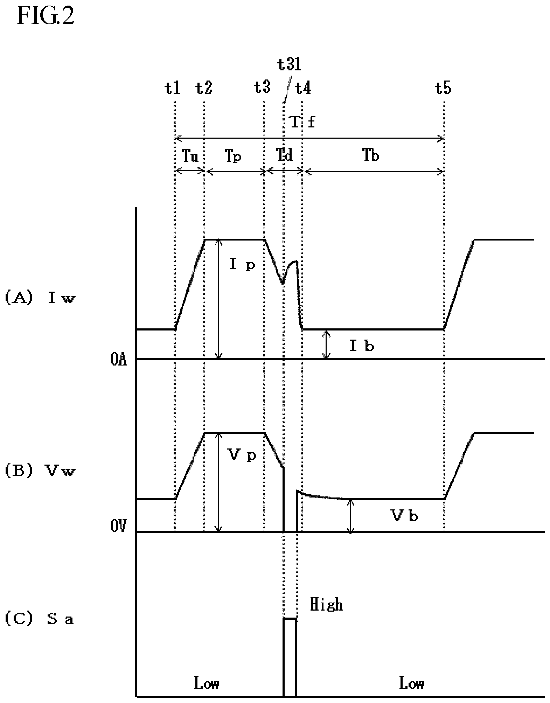

The pulse parameter correction circuit PC receives the above total correction signal Sd as input and calculates Tpr = Tp0 + (Sd×Kt), and Ipr = Ip0 + (Sd×Ki) for each "parameter correction period" that contains a predetermined number of consecutive pulse periods. The pulse parameter correction circuit PC outputs the two calculated values as a peak period setting signal Tpr and a peak current setting signal Ipr, respectively, where Tp0 and Ip0 are predetermined initial values, and Kt and Ki are predetermined coefficients. More detailed operations of the pulse parameter correction circuit PC will be described later with reference to Fig. 2.

The timer circuit TM receives the pulse frequency signal Tfs as input, the rising period setting signal Tur, the peak period setting signal Tpr, and the falling period setting signal Tdr, and outputs a timer signal Tm. When the pulse frequency signal Tfs changes from the Low level to the High level, the value of the timer signal Tm becomes 1 during the rising period Tu determined by the rising period setting signal Tur. After that, the value of the timer signal Tm becomes 2 during the peak period Tp determined by the peak period setting signal Tpr. Then, the value of the timer signal Tm becomes 3 during the falling period Td determined by the falling period setting signal Tdr, and after that the value of the timer signal Tm becomes 4 during the base period Tb which continues until the pulse frequency signal Tfs changes again from the Low level to the High level.

The base current setting circuit IBR outputs a predetermined base current setting signal Ibr.

The current control setting circuit ICR receives the timer signal Tm, the peak current setting signal Ipr and the base current setting signal Ibr as input, performs the following processing to output a current control setting signal Icr.
1) When timer signal Tm = 1 (rising period Tu), a current control setting signal Icr that rises from the value of base current setting signal Ibr to the value of peak current setting signal Ipr is outputted.
2) When timer signal Tm = 2 (peak period Tp), a current control setting signal Icr, which is equal to the value of peak current setting signal Ipr, is outputted.
3) When timer signal Tm = 3 (falling period Td), a current control setting signal Icr that falls from the value of peak current setting signal Ipr to the value of base current setting signal Ibr is outputted.
4) When timer signal Tm = 4 (base period Tb), a current control setting signal Icr, which is equal to the value of base current setting signal Ibr, is outputted.

The welding current detection circuit ID detects the welding current Iw and outputs a welding current detection signal Id. The current error amplification circuit EI amplifies the error or difference between the current control setting signal Icr and the welding current detection signal Id, and outputs a current error amplification signal Ei. The drive circuit DV receives the current error amplification signal Ei as input, performs PWM control, and outputs a drive signal Dv for driving the inverter circuit of the above power control circuit PM.

The welding current average setting circuit IR outputs a predetermined welding current average setting signal Ir. The feeding speed setting circuit FR receives the welding current average setting signal Ir as input, calculates and outputs a feeding speed setting signal Fr. The feeding speed setting signal Fr is calculated as follows. The feeding speed setting circuit FR has a built-in relational expression between the average welding current and the feed rate. Based on this relational expression, the signal (i.e., feeding speed setting signal Fr) corresponding to the value of welding current average setting signal Ir is obtained. The relational expression may be obtained experimentally (by trial and error) or theoretically, though the present disclosure is not limited to these. The feeding control circuit FC receives the feeding speed setting signal Fr as input and outputs a feeding control signal Fc to the wire feeding motor WM. This causes the welding wire 1 to be fed at the feeding speed determined by the feeding speed setting signal Fr.

Fig. 2 is a timing chart illustrating main signals related to the power supply shown in Fig. 1. In the figure, (A) shows the time variation of a welding current Iw, (B) shows the time variation of a welding voltage Vw, and (C) shows the time variation of a short circuit detection signal Sa.

The welding current Iw rises from the base current Ib to the peak current Ip during the rising period Tu (t1 to t2), as shown in (A). In the example shown in the figure, the welding current Iw rises linearly (or substantially linearly) from the base current Ib to the peak current Ip. Similarly, the welding voltage Vw rises from the base voltage Vb to the peak voltage Vp during the period of t1 to t2, as shown in (B). During the peak period Tp (t2 to t3), the welding current Iw takes a constant peak current Ip, as shown in (A). The welding voltage Vw also takes a constant peak voltage Vp during the period of t2 to t3, as shown in (B). During the falling period Td (t3 to t4), the welding current Iw falls from the peak current Ip to the base current Ib, as understood from (A). Note that in the illustrated example, a short circuit occurs during the falling period Td, and thus the welding current Iw rises temporarily and reaches an extreme value on the way to the base current Ib. The welding voltage Vw also falls from the peak voltage Vp to the base voltage Vb during the period of t3 to t4, as understood from (B). As noted above, in the illustrated example, a short circuit occurs during the falling period Td, and thus the welding voltage Vw temporarily takes a value less than the base voltage Vb. During the base period Tb (t4 to t5), the welding current Iw takes a constant base current Ib as shown in (A). The welding voltage Vw also takes a constant (or generally constant) base voltage Vb during the period of t4 to t5, as shown in (B). The period of t1 to t5 corresponds to a single pulse period Tf. In this embodiment, the peak current Ip and peak period Tp are set or adjusted so that one droplet will transfer for every pulse period Tf. The base current Ib, however, is set to a current value small enough to produce no droplets. The peak current Ip is set by the peak current setting signal Ipr (see Fig. 1). The base current Ib is set by the base current setting signal Ibr (see Fig. 1). The rising period Tu is set by the rising period setting signal Tur (see Fig. 1). The peak period Tp is set by the peak period setting signal Tpr (see Fig. 1). The falling period Td is set by the falling period setting signal Tdr (see Fig. 1) .

The pulse period Tf is modulated so that the average value of the welding voltage Vw (welding voltage average signal Vav in Fig. 1) becomes equal to the welding voltage setting signal Vr shown in Fig. 1. By this control, the arc will have an appropriate value of length.

In Fig. 2, a short circuit occurs between the welding wire and the base material at t31 during the falling period Td, and then the short circuit state remains for a short time. Thus, as shown in (B), the welding voltage Vw takes a short circuit voltage of a few volts (or substantially 0 V) for this short period of time. As shown in (C), at t31, the short circuit detection signal Sa changes from the Low level to the High level, and this state continues for the above-noted short time. As shown in (A), the welding current Iw temporarily rises during the short circuit period and then falls again. In the illustrated example, the maximum value of the welding current Iw during the short circuit period (i.e., local maximum value) is smaller than the peak current Ip. In the example of Fig. 2, the short circuit occurrence timing detection circuit TSA (FIG. 1) outputs a short circuit occurrence timing detection signal Tsa = 3 due to the short circuit occurring during the falling period Td. Upon receiving this signal, the total correction calculation circuit SD (Fig. 1) outputs a predetermined third correction Sd3 corresponding to the short circuit occurrence timing detection signal Tsa = 3, and stores the correction value in a internal or external memory of the total correction calculation circuit SD. The total correction calculation circuit SD integrates (i.e., calculates the sum of) such correction amounts over each parameter correction period, and outputs the integration result as a total correction signal Sd for each parameter correction period.

For instance, it is assumed that the parameter correction period is set to "5" (in other words, the parameter correction period consists of 5 consecutive pulse periods Tf) . For the first pulse period (more generally, the nth pulse period) of the 5 pulse periods, if a short circuit occurs during the rising period Tu, then the signal Tsa takes a value of 1 (Tsa = 1) and correspondingly a correction value ("first correction Sd1") is determined. Likewise, for the second period ((n+1)th period) of the 5 pulse periods, if a short circuit occurs during the peak period Tp, then the signal Tsa takes a value of 2 (Tsa = 2) and correspondingly a correction value ("second correction Sd2") is determined. For the third period ((n+2)th period) of the 5 pulse periods, if a short circuit occurs during the falling period Td, then the signal Tsa takes a value of 3 (Tsa = 3) and correspondingly a correction value ("third correction Sd3") is determined. For the fourth period ((n+3)th period) of the 5 pulse periods, if a short circuit occurs during the base period Tb, then the signal Tsa takes a value of 4 (Tsa = 4) and correspondingly a correction value ("fourth correction Sd4") is determined. Lastly, for the fifth period ((n+4)th period) of the 5 pulse periods, if a short circuit occurs during the peak period Tp, then the signal Tsa takes a value of 2 (Tsa = 2) and correspondingly a correction value ("fifth correction Sd5") is determined. Note that since the signal Tsa takes the same value of 2, the fifth correction Sd5 will be equal to the second correction Sd2. The total correction signal Sd is equal to the sum of Sd1, Sd2, Sd3, Sd4 and Sd5 (=Sd2). As an example, when Sd1 = 1, Sd2 = -1, Sd3 = -0.6, and Sd4 = 0, the total correction signal Sd has a value of -1.6.

Then, the pulse parameter correction circuit PC (Fig. 1) receives the above-noted total correction signal Sd as input and calculates Tpr (= Tp0 + Sd × Kt) and Ipr (= Ip0 + Sd × Ki) for every parameter correction period (consisting of 5 pulse periods in the above example). It is assumed, for example, that the coefficient Kt = 10 (µs) and coefficient Ki = 5 (A). Then, Sd × Kt = -1.6 × 10 = -16 (µs), and Sd × Ki = -1.6 × 5 = -8 (A). Thus, in this case, the peak period Tp will be shortened by 16 µs, while the peak current Ip will be reduced by 8 A at the timing that the fifth ((n+4)th) pulse period comes to an end.

In this embodiment, the timing of the short circuit occurrence is classified into four periods (rising period Tu, peak period Tp, falling period Td, and base period Tb). This is because, as described below, the welding state differs depending on the timing when the short circuit occurs. According to the configuration of the present disclosure, it is possible to converge the short circuit occurrence timing within the base period by modifying a pulse parameter. The optimization of pulse parameters is based on the following analysis.
(1) Rising Period Tu: Preparation period for producing a droplet at the tip of the welding wire.
   A short circuit occurs during this period because the amount of heat input is insufficient for ensuring the state of one pulse-one droplet transfer. In such a case, one droplet transfer occurs over a length of multiple pulse periods. To remedy this undesired situation, it is necessary to lengthen the peak period Tp and/or increase the peak current Ip.
(2) Peak Period Tp: Period for growing the droplet.
   A short circuit occurs during this period because the amount of heat input is excessive for the desired droplet transfer. In such a case, multiple droplet transfers occur for one pulse period. To remedy this undesired situation, it is necessary to shorten the peak period Tp and/or reduce the peak current Ip.
(3) Falling Period Td: Period for forming a constriction in the droplet to promote the transfer of the droplet.
   A short circuit occurs during this period because the amount of heat input is slightly excessive. To remedy this undesired situation, it is necessary to slightly shorten the peak period Tp and/or slightly reduce the peak current Ip.
(4) Base Period Tb: Period for stopping the growth of the droplet and causing the droplet to transfer.
   A short circuit occurs during this period because the desired, stable transfer state (i.e., one pulse-one droplet transfer) is realized. In this case, the peak period Tp and/or the peak current Ip are optimized and no remedy is required. Alternatively, the base period may be divided (e.g., halved) into two sub-periods, i.e., a first (leading) sub-period and a second (trailing or latter) sub-period, and the pulse parameters may be modified (optimized) so that a short circuit should occur during the first sub-period, but not during the second one. If the short circuit occurs during the second sub-period, which means shortage of the heat input, then the peak period Tp may be lengthened and/or the peak current Ip may be increased.

Numerical examples of the pulse parameters are as follows.
Peak period initial value Tp0 = 1.5 (ms)
Peak current initial value Ip0 = 500 (A)
Rising period Tu = 1 (ms)
Falling period Td = 1 (ms)
Base current Ib = 50 (A)
Pulse period Tf (modulation width) = 4 to 10 (ms)
Parameter correction period = 3 to 10 (number of pulse periods involved)

In the correction of the peak period Tp and the peak current Ip, the upper limit and the lower limit of the correction range may be set. With such upper and lower limits, it is possible to prevent the parameter correction control from becoming unstable. Further, if more than one short circuit occurs during one pulse period, it is preferable that the timing when the first short circuit occurs is the target of correction control. This is because the occurrence timing of the first short circuit is important to determine the appropriateness of the amount of heat input. Further, the convergence value (optimized value) of the pulse parameters may be stored, and welding may be started with the convergence value at the time of the next welding operation. In such manners, it is possible to ensure a stable state of "one pulse-one droplet transfer" immediately after the welding operation starts.

The pulse arc welding power supply according to the above-described embodiment includes, for example, the following features: (1) a short circuit occurrence timing detection circuit configured to detect a timing when a short circuit occurs between a welding wire and a base material for each pulse period; (2) a total correction amount calculation circuit configured to calculate and output a total correction amount for each parameter correction period (cycle), where the total correction amount is obtained by adding all the correction amounts or values over the parameter correction period, each correction amount corresponding to the timing of a short circuit occurrence during a corresponding pulse period; and (3) a parameter correction circuit configured to adjust, based on the total correction amount, a pulse parameter defining the waveform of the welding current. Further, four periods are considered in accordance with the timing of the short circuit occurrence: a rising period, a peak period, a falling period and a base period. The pulse parameters may include a peak period and/or a peak current (more precisely, parameters relating to a peak period and/or a peak current). According to the above embodiment, the transient response can be improved by setting the correction amounts properly in light of the timing of a short circuit occurrence. Further, the correction amounts of a predetermined number of consecutive pulse periods are totaled over a longer pulse period consisting of the consecutive pulse periods, and then, based on the result of this addition, the pulse parameters are adjusted to achieve good steady-state stability. As a result, in the present embodiment, transient response and steady-state stability can be improved in the automatic correction control of pulse parameters.

### REFERENCE NUMERALS

- 1: welding wire
- 1a: wire reel
- 2: base material
- 3: arc
- 4: welding torch
- 5: feeding roll
- DV: drive circuit
- Dv: drive signal
- EI: current error amplification circuit
- Ei: current error amplification signal
- EV: voltage error amplification circuit
- Ev: voltage error amplification signal
- FC: feeding control circuit
- Fc: feeding control signal
- FR: feeding speed setting circuit
- Fr: feeding speed setting signal
- Ib: base current
- IBR: base current setting circuit
- Ibr: base current setting signal
- ICR: current control setting circuit
- Icr: current control setting signal
- ID: weld current detection circuit
- Id: welding current detection signal
- Ip: peak current
- Ip0: initial value of peak current
- Ipr: peak current setting signal
- IR: welding current average setting circuit
- Ir: welding current average setting signal
- Iw: welding current
- PC: pulse parameter correction circuit
- PM: power control circuit
- SA: short circuit detection circuit
- Sa: short circuit detection signal
- SD: total correction calculation circuit
- Sd: total correction amount signal
- Tb: base period
- Td: falling period
- TDR: falling period setting circuit
- Tdr: falling period setting signal
- Tf: pulse period
- Tfs: pulse period signal
- TM: timer circuit
- Tm: timer signal
- Tp: peak period
- Tp0: initial value of peak period
- Tpr: peak period setting signal
- TSA: short circuit timing detection circuit
- Tsa: short circuit timing detection signal
- Tu: rising period
- TUR: rising period setting circuit
- Tur: rising period setting signal
- VAV: average welding voltage calculation circuit
- Vav: average welding voltage signal
- VD: welding voltage detection circuit
- Vd: weld voltage detection signal
- VF: voltage-frequency conversion circuit
- VR: welding voltage setting circuit
- Vr: welding voltage setting signal
- Vw: welding voltage
- WM: wire feeding motor

## Claims

1. A pulse arc welding power supply comprising:
a power control circuit (PM) configured to output a welding current (Iw) for a repetition of a pulse period (Tf) including a combination of a rising period (Tu), a peak period (Tp), a falling period (Td) and a base period (Tb), the power control circuit (PM) outputting: a rising transient current increasing from a base current (Ib) to a peak current (Ip) during the rising period (Tu); the peak current (Ip) during the peak period (Tp); a falling transient current decreasing from the peak current (Ip) to the base current (Ib) during the falling period (Td); and the base current (Ib) during the base period (Tb);
**characterized in that** it further comprises
a short circuit occurrence timing detection circuit (TSA) configured to detect a timing when a short circuit occurs between a welding wire (1) and a base material (2) for every pulse period (Tf);
a total correction amount calculation circuit (SD) configured to calculate a sum of correction amounts for a correction cycle including a predetermined number of pulse periods (Tf), each correction amount being predetermined correspondingly to a short circuit occurrence timing during a pulse period (Tf); and
a parameter correction circuit (PC) configured to adjust, based on the sum of correction amounts, at least one pulse parameter relating to a waveform of the welding current (Iw).

2. The pulse arc welding power supply according to claim 1, wherein the short circuit occurrence timing is included in one of the rising period (Tu), the peak period (Tp), the falling period (Td) and the base period (Tb).

3. The pulse arc welding power supply according to claim 1 or 2, wherein the at least one pulse parameter comprises a parameter relating to the peak period (Tp).

4. The pulse arc welding power supply according to claim 1 or 2, wherein the at least one pulse parameter comprises a parameter relating to the peak current (Ip).

5. The pulse arc welding power supply according to claim 1 or 2, wherein the at least one pulse parameter comprises parameters relating to the peak period (Tp)and the peak current (Ip).

## Patentansprüche

1. Stromversorgung für Impulslichtbogenschweißen, umfassend:
eine Leistungssteuerschaltung (PM), die konfiguriert ist, einen Schweißstrom (Iw) auszugeben für eine Wiederholung einer Impulsperiode (Tf), die eine Kombination aus einer Anstiegsperiode (Tu), einer Spitzenperiode (Tp), einer Abfallperiode (Td) und einer Basisperiode (Tb) umfasst, wobei die Leistungssteuerschaltung (PM) Folgendes ausgibt: einen ansteigenden transienten Strom, der während der Anstiegsperiode (Tu) von einem Basisstrom (Ib) auf einen Spitzenstrom (Ip) ansteigt; den Spitzenstrom (Ip) während der Spitzenperiode (Tp); einen abfallenden transienten Strom, der während der Abfallperiode (Td) von dem Spitzenstrom (Ip) auf den Basisstrom (Ib) abfällt; und den Basisstrom (Ib) während der Basisperiode (Tb);
**dadurch gekennzeichnet, dass** diese ferner umfasst
eine Schaltung zur Erfassung eines Kurzschluss-Auftritt-Zeitpunkts (TSA), die konfiguriert ist, für jede Impulsperiode (Tf) einen Zeitpunkt zu erfassen, zu dem ein Kurzschluss zwischen einem Schweißdraht (1) und einem Grundmaterial (2) auftritt;
eine Schaltung zur Berechnung eines Gesamtkorrekturbetrags (SD), die konfiguriert ist, eine Summe von Korrekturbeträgen für einen Korrekturzyklus, der eine vorbestimmte Anzahl von Impulsperioden (Tf) umfasst, zu berechnen, wobei jeder Korrekturbetrag entsprechend eines Kurzschluss-Auftritt-Zeitpunkts während einer Impulsperiode (Tf) vorbestimmt ist; und
eine Parameterkorrekturschaltung (PC), die konfiguriert ist, basierend auf der Summe der Korrekturbeträge mindestens einen Impulsparameter im Zusammenhang mit der Wellenform des Schweißstroms (Iw) einzustellen.

2. Stromversorgung für Impulslichtbogenschweißen nach Anspruch 1, wobei der Kurzschluss-Auftritt-Zeitpunkt in der Anstiegsperiode (Tu), der Spitzenperiode (Tp), der Abfallperiode (Td) oder der Basisperiode (Tb) enthalten ist.

3. Stromversorgung für Impulslichtbogenschweißen nach Anspruch 1 oder 2, wobei der mindestens eine Impulsparameter einen Parameter im Zusammenhang mit der Spitzenperiode (Tp) umfasst.

4. Stromversorgung für Impulslichtbogenschweißen nach Anspruch 1 oder 2, wobei der mindestens eine Impulsparameter einen Parameter im Zusammenhang mit dem Spitzenstrom (Ip) umfasst.

5. Stromversorgung für Impulslichtbogenschweißen nach Anspruch 1 oder 2, wobei der mindestens eine Impulsparameter Parameter im Zusammenhang mit der Spitzenperiode (Tp) und dem Spitzenstrom (Ip) umfasst.

## Revendications

1. Alimentation électrique de soudage à l'arc par impulsion comprenant :
un circuit de commande de puissance (PM) configuré pour sortir un courant de soudage (Iw) pour une répétition d'une période d'impulsion (Tf) comportant une combinaison d'une période ascendante (Tu), d'une période de crête (Tp), d'une période descendante (Td) et d'une période de base (Tb), le circuit de commande de puissance (PM) sortant : un courant transitoire ascendant augmentant à partir d'un courant de base (Ib) vers un courant de crête (Ip) pendant la période ascendante (Tu) ; le courant de crête (Ip) pendant la période de crête (Tp) ; un courant transitoire descendant diminuant à partir du courant de crête (Ip) vers le courant de base (Ib) pendant la période descendante (Td) ; et le courant de base (Ib) pendant la période de base (Tb) ;
**caractérisé en ce qu'**elle comprend en outre
un circuit de détection de moment d'occurrence de court-circuit (TSA) configuré pour détecter un moment où un court-circuit se produit entre un fil à souder (1) et un matériau de base (2) pour chaque période d'impulsion (Tf) ;
un circuit de calcul de quantité de correction totale (SD) configuré pour calculer une somme de quantités de correction pour un cycle de correction comportant un nombre prédéterminé de périodes d'impulsion (Tf), chaque quantité de correction étant prédéterminée de manière correspondante à un moment d'occurrence de court-circuit pendant une période d'impulsion (Tf) ; et
un circuit de correction de paramètre (PC) configuré pour régler, sur la base de la somme de quantités de correction, au moins un paramètre d'impulsion lié à une forme d'onde du courant de soudage (Iw) .

2. Alimentation électrique de soudage à l'arc par impulsion selon la revendication 1, dans laquelle le moment d'occurrence de court-circuit est inclus dans une de la période ascendante (Tu), la période de crête (Tp), la période descendante (Td) et la période de base (Tb).

3. Alimentation électrique de soudage à l'arc par impulsion selon la revendication 1 ou 2, dans laquelle le au moins un paramètre d'impulsion comprend un paramètre lié à la période de crête (Tp).

4. Alimentation électrique de soudage à l'arc par impulsion selon la revendication 1 ou 2, dans laquelle le au moins un paramètre d'impulsion comprend un paramètre lié au courant de crête (Ip).

5. Alimentation électrique de soudage à l'arc par impulsion selon la revendication 1 ou 2, dans laquelle le au moins un paramètre d'impulsion comprend des paramètres liés à la période de crête (Tp) et au courant de crête (Ip).
